# EUROPÄISCHE PATENTANMELDUNG

(11) **EP 1 321 398 A1**
(43) Veröffentlichungstag der Anmeldung: **25.06.2003**
(21) Anmeldenummer: 02027444.5
(22) Anmeldetag: 10.12.2002
(51) Int. Cl.: B65G 69/00

(54) **Positioniereinrichtung für Nutzfahrzeuge und Führungselementsatz**

(30) Priorität: 19.12.2001 DE 10164052
(71) Anmelder: Alfred Arnold Verladesysteme, 70469 Stuttgart (DE)
(72) Erfinder:
(74) Vertreter: Patentanwälte Ruff, Wilhelm, Beier, Dauster & Partner

(57) **Zusammenfassung**

Die Erfindung betrifft eine Positioniereinrichtung (10) für Nutzfahrzeuge (16) mit wenigstens einem mit einer Fahrbahn (12) verbindbaren ersten Führungselement (26), an dem wenigstens ein zweites Führungselement (34) des Nutzfahrzeugs (16) zur Positionierung einer Ladefläche (20) des Nutzfahrzeugs (16) in Fahrzeughochrichtung angreifen kann, wobei steuerbare Anschlagmittel (40) zur wahlweisen Fixierung des Nutzfahrzeugs (16) in Fahrzeuglängsrichtung vorgesehen sind.

Erfindungsgemäß erfolgt eine Führung des Nutzfahrzeugs (16) in Fahrzeughoch- und Fahrzeugquerrichtung mittels dem an dem ersten rampenartigen Führungselement (26) angreifenden zweiten Führungselement (34).

## Beschreibung

Die Erfindung betrifft eine Positioniereinrichtung für Nutzfahrzeuge mit wenigstens einem mit einer Fahrbahn verbindbaren ersten rampenartigen Führungselement, an dem wenigstens ein zweites Führungselement eines Nutzfahrzeugs zur Positionierung einer Ladefläche des Nutzfahrzeugs in Fahrzeughochrichtung angreifen kann, wobei steuerbare Anschlagmittel zur wahlweisen Fixierung des Nutzfahrzeugs in Fahrzeuglängsrichtung vorgesehen sind. Die Erfindung betrifft auch einen Führungselementsatz zur Verwendung mit einer erfindungsgemäßen Positioniereinrichtung.

Aus der europäischen Patentschrift EP 0 668 225 B1 ist im Zusammenhang mit einer Verladeanlage zum Be- und Entladen von Nutzfahrzeugen eine Positioniereinrichtung für Nutzfahrzeuge bekannt, die vor einer Laderampe in dem Bereich angeordnet wird, in dem das Heck eines Nutzfahrzeugs während eines Ladevorgangs angeordnet wird. Eine solche Positioniereinrichtung weist zwei Auflauframpen für Steigrollen auf, die am Heck eines Nutzfahrzeugs angeordnet sind. Durch die Steigrollen liegt das Heck des Nutzfahrzeugs auf der Positioniereinrichtung auf, so dass das Fahrzeugheck einerseits stabilisiert und andererseits auf eine vorbestimmte Höhe gebracht wird. Solche Fahrzeugpositioniereinrichtungen erfordern eine genaue Abstimmung von Nutzfahrzeugen und Positioniereinrichtung, um die vorbestimmte Höhe für den Ladevorgang zu erreichen. Um zu verhindern, dass das Nutzfahrzeug vor Beenden des Ladevorgangs weggefahren wird, müssen zusätzliche Maßnahmen getroffen werden, beispielsweise Sicherungsketten, Unterlegkeile, Ampeln usw.

Aus der französischen Offenlegungsschrift FR 2 750 123 A1 ist eine Positioniereinrichtung für Nutzfahrzeuge bekannt, die eine höhenverstellbare Rampe aufweist. Zur Positionierung einer Ladefläche in Bezug auf eine Laderampe wird ein Nutzfahrzeug rückwärts auf die Rampe aufgefahren, durch Anschläge und Keile an den Rädern auf dieser Rampe fixiert und daraufhin wird die Rampe zur Höheneinstellung um einen in Fahrzeuglängsrichtung von der Laderampe entfernt liegenden Drehpunkt geschwenkt.

Aus der französischen Offenlegungsschrift FR 2.203.764 ist eine Positioniereinrichtung für Nutzfahrzeuge bekannt, mit der eine Positionierung der Ladefläche eines Nutzfahrzeuganhängers in Fahrzeughochrichtung und Fahrzeugquerrichtung erfolgen kann. Hierzu ist im Bereich der Laderampe eine maulartige Vorrichtung angebracht, die eine obere und eine untere rampenartige Führungsfläche aufweist. Ein Abstand der Führungsflächen zueinander verringert sich in Richtung auf die Laderampe zu. In diese maulartige Vorrichtung wird eine am Heck des Nutzfahrzeuganhängers horizontal angebrachte Walze eingeführt. Die Walze und die rampenartigen Führungsflächen der maulartigen Vorrichtung sorgen dadurch für eine Positionierung des Nutzfahrzeuganhängers in Fahrzeughochrichtung. Am Nutzfahrzeuganhänger sind weitere Führungsflächen für eine Positionierung des Anhängers in Fahrzeugquerrichtung angeordnet. Die Führungsflächen sind parallel zur Fahrzeughochrichtung angeordnet und ihr Abstand erweitert sich in Richtung auf das Fahrzeugheck zu. Diese vertikalen Führungsflächen am Nutzfahrzeuganhänger sind für einen Eingriff mit ebenfalls vertikalen Seitenflächen der maulartigen Vorrichtung vorgesehen, deren Abstand zueinander sich in einer Richtung von der Laderampe weg verringert. Nach dem Einführen der Rolle am Heck des Nutzfahrzeuganhängers greifen auch die vertikalen Führungsflächen am Nutzfahrzeuganhänger an den entsprechenden Führungsflächen der maulartigen Einrichtung an, so dass der Nutzfahrzeuganhänger gleichzeitig in Fahrzeughochrichtung und Fahrzeugquerrichtung positioniert wird.

Aus der amerikanischen Patentschrift US 3,666,118 ist eine weitere Positioniereinrichtung für Nutzfahrzeuge bekannt. Im Bereich unmittelbar vor einer Laderampe sind mehrere Führungsrampen fest mit einer Fahrbahnoberfläche verbunden. Die Führungsrampen sollen mit Rollen am Heck des Nutzfahrzeuganhängers zusammenwirken, um den Nutzfahrzeuganhänger auf ein vordefiniertes Höhenniveau zu bringen. In seiner Endlage an der Laderampe liegt der Nutzfahrzeuganhänger dann mit einer horizontalen Auflagefläche auf einer ebenfalls horizontalen Auflagefläche im Endbereich der Führungsrampen auf. Während des Auffahrens des Nutzfahrzeuganhängers auf die Führungsrampen greift gleichzeitig ein Führungsstift in einen sich V-förmig verjüngenden Führungsspalt zwischen zwei Führungsrampen ein. Durch diesen Eingriff des Führungsstiftes wird der Nutzfahrzeuganhänger bei einer Bewegung in Richtung auf die Laderampe zu in Fahrzeugquerrichtung positioniert. In der vorgesehenen Endlage des Nutzfahrzeuganhängers schlägt der Führungsstift am Ende eines Führungsschlitzes mit parallelen Seitenwänden, der den V-förmigen Führungsspalt fortsetzt, an, wobei dieser Führungsschlitz in der horizontalen Auflagefläche, die mit der Fahrbahn verbunden ist, vorgesehen ist. In seiner Endlage kann ein Sicherungshaken an dem Führungsstift angreifen und dadurch den Nutzfahrzeuganhänger gegen ein unbeabsichtigtes Wegfahren sichern.

Mit der Erfindung soll eine exakte Positionierung der Ladefläche eines Nutzfahrzeugs sowie dessen Wegfahrsicherung für einen Ladevorgang mit geringem baulichen Aufwand erreicht werden.

Erfindungsgemäß ist hierzu eine Positioniereinrichtung für Nutzfahrzeuge mit wenigstens einem mit einer Fahrbahn verbindbaren ersten rampenartigen Führungselement, an dem wenigstens ein zweites Führungselement eines Nutzfahrzeugs zur Positionierung einer Ladefläche des Nutzfahrzeugs in Fahrzeughochrichtung angreifen kann, vorgesehen, bei dem steuerbare Anschlagmittel zum wahlweisen Fixieren des Nutzfahrzeugs in Fahrzeuglängsrichtung vorgesehen sind, wobei eine Führung des Nutzfahrzeugs in Fahrzeughoch- und Fahrzeugquerrichtung mittels dem an dem ersten rampenartigen Führungselement angreifenden wenigstens eines zweiten Führungselement erfolgt.

Mit einer solchen Positioniereinrichtung wird neben einer Positionierung des Nutzfahrzeugs auch die Funktion einer Wegfahrsperre verwirklicht. Dadurch können zusätzliche Sicherungsmaßnahmen, wie Unterlegkeile oder Sicherungsketten, entfallen. Die Anschlagmittel werden mechanisch, beispielsweise mittels einer überfahrbaren Klinke, elektrisch, hydraulisch oder pneumatisch betätigt. Am Nutzfahrzeug sind als Führungselemente beispielsweise Steigrollen oder Steigkufen vorgesehen, als mit der Fahrbahn verbindbare Führungselemente werden Schienen oder Rampen eingesetzt. Die zweiten Führungselemente am Nutzfahrzeug übernehmen beim Zusammenwirken mit den mit der Fahrbahn verbundenen ersten Führungselementen sowohl die Positionierung des Nutzfahrzeugs in Fahrzeughochrichtung als auch in Fahrzeugquerrichtung. Dadurch muss ein konventionelles Nutzfahrzeug lediglich mit den zweiten Führungselementen nachgerüstet werden. Durch die Erfindung wird ein Nutzfahrzeug für einen Ladevorgang in Hoch-, Quer- und Längsrichtung positioniert, und es werden die Voraussetzungen für eine automatische Be- und Entladung geschaffen. Beispielsweise greift eine Steigrolle mit einem Rollenkörper und einem umlaufenden Bund an einer Schiene an.

In Weiterbildung der Erfindung ist als zweites Führungselement wenigstens eine Steigkufe vorgesehen.

Durch Vorsehen von beispielsweise zwei Steigkufen im Heckbereich des Fahrzeugs, die in Fahrzeugquerrichtung voneinander beabstandet sind, wird eine wenig fehleranfällige Konstruktion geschaffen, die nur wenig Bauraum benötigt. Gegenüber Rollen oder Walzen können Steigkufen wesentlich kompakter ausgeführt werden, da aufgrund der erheblichen Belastungen der Führungselemente Rollen oder Walzen vergleichsweise groß ausgeführt werden müssen. Steigkufen können dahingegen durch vollständigen Verzicht auf bewegliche Teile stabil und dabei kompakt ausgebildet werden.

Die Anschlagmittel können einen an dem wenigstens einen ersten Führungselement fest angebrachten Endanschlag sowie einen beweglichen Sicherungsanschlag aufweisen, der dann, wenn das wenigstens eine am Nutzfahrzeug angeordnete zweite Führungselement eine Endposition am Endanschlag erreicht hat, in die Sicherungsposition bewegt wird.

Auf diese Weise ist sichergestellt, dass das Nutzfahrzeug erst in einer vorbestimmten Endposition, die für den Ladevorgang geeignet ist, gesichert wird. Der Sicherungsanschlag kann beispielsweise mittels eines elektrischen Hubelements linear verschoben werden. Möglich ist beispielsweise auch eine Schwenkbewegung des Sicherungsanschlags. Vorteilhafterweise befindet sich der Sicherungsanschlag in der Sicherungsposition in Gegenüberlage des Endanschlags, so dass eine Steigrolle des Nutzfahrzeugs zwischen Endanschlag und Sicherungsanschlag aufgenommen werden kann.

In Weiterbildung der Erfindung sind ein beweglicher Sicherungsanschlag und ein Endanschlag der Anschlagmittel für einen Eingriff mit dem wenigstens einen zweiten Führungselement vorgesehen und der Endanschlag ist mit einem elastischen Puffer versehen.

Indem an der Positioniereinrichtung ein elastischer Puffer vorgesehen ist, können Puffer am Gebäude möglicherweise entfallen. Dadurch kann der Ladeaufbau des Nutzfahrzeugs leichter ausgeführt werden, da er nicht auf die Belastung der Pufferung ausgelegt werden muss. Als Puffer kann beispielsweise eine Tellerfeder mit Schutzschild und mechanischem Anschlag eingesetzt werden. Die Pufferung erfolgt dabei unmittelbar an den zweiten Führungselementen, die ohnehin in stabiler Weise am Fahrzeugrahmen befestigt sein müssen. Als beweglicher Sicherungsanschlag kann beispielsweise auch ein Fanghaken vorgesehen sein.

Es können erste Sensormittel zum Erkennen des Erreichens der Endposition des wenigstens einen am Nutzfahrzeug angeordneten zweiten Führungselements vorgesehen sein.

Indem das Erreichen der Endposition erkannt wird, beispielsweise mittels eines Schalters im elastischen Puffer des Endanschlags oder einer Lichtschranke, kann der Sicherungsanschlag automatisch in die Sicherungsposition bewegt werden. Beispielsweise ist auch das Öffnen eines Verladetores oder das Ausfahren eines Verladewetterschutzes in Reaktion auf das Erreichen der Endposition möglich. Nach Beendigung eines Ladevorgangs wird, beispielsweise mittels eines Handschalters, ein Freigabesignal erzeugt, auf das hin die Fixierung der am Nutzfahrzeug angeordneten zweiten Führungselemente, beispielsweise Steigrollen, wieder aufgehoben wird.

In Weiterbildung der Erfindung ist eine ansteuerbare Höheneinstellvorrichtung zum Verstellen des wenigstens einen ersten Führungselements in Fahrzeughochrichtung vorgesehen.

Durch diese Maßnahmen kann eine Höhenanpassung einer Ladefläche des Nutzfahrzeugs an eine Laderampe erfolgen. Auf diese Weise können auch Nutzfahrzeuge mit in unterschiedlicher Höhe angeordneten Führungsmitteln, beispielsweise Steigrollen, für einen Ladevorgang an eine Laderampe angepasst werden. Die Höheneinstellvorrichtung kann manuell oder automatisch angesteuert werden und ist auf elektrischer, hydraulischer oder mechanischer Basis realisiert.

Weiterhin können zweite Sensormittel zum Erkennen eines Höhenunterschieds zwischen einer Ladefläche des Nutzfahrzeugs und einer Laderampe vorgesehen sein.

Dadurch werden die Voraussetzungen für eine von der Einschätzung eines Bedieners unabhängige Höheneinstellung der Ladefläche des Nutzfahrzeugs geschaffen.

Eine zentrale Steuereinheit kann zum Verarbeiten von Signalen der zweiten Sensormittel und zum Ansteuern der Höheneinstellvorrichtung vorgesehen sein.

Mittels einer solchen zentralen Steuereinheit kann eine automatische Höheneinstellung in Abhängigkeit einer Höhendifferenz zwischen Laderampe und Ladefläche eines Nutzfahrzeugs erfolgen.

Die zentrale Steuereinheit ist zweckmäßigerweise zum Verarbeiten der Signale der ersten Sensormittel vorgesehen.

Durch diese Maßnahmen kann eine Höheneinstellung vollautomatisch erfolgen. Wenn das Nutzfahrzeug bzw. dessen Führungselemente die Endposition erreichen, werden diese zunächst an den mit der Fahrbahn verbundenen Führungselementen blockiert und daraufhin bewirkt die zentrale Steuereinheit eine Höheneinstellung.

Die Höheneinstellvorrichtung kann eine Ausgangsstellung mit maximalen Höhenniveau des wenigstens einen ersten Führungselements aufweisen, die bis zum Fixieren des am Nutzfahrzeug angeordneten wenigstens einen zweiten Führungselements durch die Anschlagmittel beibehalten wird, und bei dem die zentrale Steuereinheit nach Fixieren des zweiten Führungselements die Höheneinstellvorrichtung in eine Ladestellung mit gleichem oder niedrigerem Höhenniveau überführt.

Auf diese Weise ist kein Anheben des Nutzfahrzeughecks mit der Höheneinstellvorrichtung erforderlich. Ein - anfänglicher - Höhengewinn erfolgt beispielsweise durch Auffahren auf die als Rampen ausgebildeten ersten Führungselemente. Indem mittels der Höheneinstellvorrichtung lediglich die zum Ablassen und Blockieren erforderlichen Kräfte aufgebracht werden müssen, kann deren Antrieb schwächer ausgelegt werden.

Es können Mittel zum Erzeugen eines Signals, das eine Beendigung eines Ladevorgangs anzeigt, vorgesehen sein, wobei die zentrale Steuereinheit nach Eingang dieses Signals die Höheneinstellvorrichtung absenkt und die Anschlagmittel in die Freigabeposition steuert.

Dadurch wird die mittels der Positioniereinrichtung bewirkte Wegfahrsperre erst nach Beendigung des Ladevorgangs aufgehoben. Die Beendigung des Ladevorgangs kann beispielsweise durch Umlegen eines Handschalters oder auch durch eine Fertigmeldung eines Verladeroboters signalisiert werden.

In Weiterbildung der Erfindung sind als erste Führungselemente zwei L-artige Führungsschienen vorgesehen.

Mittels L-artiger Führungsschienen, die nach Art einer Rampe mit der Fahrbahn verbunden werden, lässt sich auf einfache Weise eine Führung sowohl in Fahrzeugquerrichtung als auch in Fahrzeughochrichtung erreichen. Ein Übergang zwischen den vertikalen und den horizontalen Führungsflächen der L-artigen Führungsschienen kann dabei mit einem geeigneten Übergangsradius versehen sein, um ein Gleiten von Steigkufen auf den Führungsschienen zu erleichtern.

In Weiterbildung der Erfindung weist das erste Führungselement wenigstens eine, gitterrostartig ausgebildete Rampenfläche auf.

Durch Vorsehen eines Gitterrostes wird eine wenig verschmutzungsanfällige Positioniereinrichtung geschaffen. Eventuelle Verschmutzungen an den Führungselementen des Nutzfahrzeugs oder auf den Rampen selbst fallen durch den Gitterrost hindurch oder werden bei dessen Benutzung durch dessen Öffnungen hindurchgedrückt. Gitterrostartige Rampenflächen sind sowohl bei Verwendung von Steigkufen als auch bei Verwendung von Steigrollen vorteilhaft.

Vorteilhafterweise kann das erste Führungselement wenigstens eine mit mehreren Kugelrollen versehene Rampenfläche aufweisen.

Unter Kugelrollen werden in der Rampenfläche drehbar gelagerte Kugeln verstanden, die sich mit einem Abschnitt ihrer Kugelfläche über die Rampenoberfläche hinaus erstrecken. Ein Abstand zwischen benachbarten Kugelrollen wird so bemessen, dass eine Steigkufe bei einer Bewegung über die Rampenfläche lediglich auf den Kugeloberflächen zu liegen kommt. Dadurch ist eine reibungsarme Bewegung der Steigkufen über die Rampenfläche möglich.

In Weiterbildung der Erfindung weist das erste Führungselement zwei mit einer Hauptkomponente vertikale angeordnete Führungsflächen auf, wobei sich ein Abstand der vertikalen Führungsflächen in Richtung auf den Endanschlag zu verringert, eine der Führungsflächen parallel zu einer Längsachse der Positioniereinrichtung angeordnet ist und die andere Führungsfläche in einem Winkel zu dieser Längsachse verläuft.

Trifft das Nutzfahrzeug parallel zur Längsachse auf die ersten Führungselemente auf, so wird es folglich nur dann in Fahrzeugquerrichtung versetzt, wenn es auf die in einem Winkel zur Längsachse angeordnete Führungsfläche auftrifft. Die gegenüberliegende Führungsfläche ist dahingegen parallel zur Längsachse angeordnet. Eine solche Anordnung ist generell vorteilhaft, da Fahrer von Nutzfahrzeugen in aller Regel aus einer Rückwärtskurvenfahrt heraus versuchen, an einer Laderampe anzudocken. Die in einem Winkel zur Längsachse angeordnete Führungsfläche wird vorteilhafterweise auf der Seite angeordnet, auf der ein Fahrer des Nutzfahrzeugs sitzt, üblicherweise somit in Vorwärtsfahrtrichtung des Nutzfahrzeugs gesehen auf der linken Seite. Ein Fahrer kann dadurch sehr genau die in einem Winkel zur Längsachse angeordnete Führungsfläche anfahren.

In Weiterbildung der Erfindung beträgt der Winkel, in dem die vertikale Führungsfläche zur Längsachse angeordnet ist, zwischen 3° und 10°, insbesondere 5°.

Ein Winkel von etwa 5° ergibt sich beispielsweise bei einem Seitenversatz von 150mm auf eine Strecke von 1700mm parallel zur Längsachse. Der Führungswinkel ist dabei so gewählt, dass er dem minimalen Wendekreis eines Nutzfahrzeugs entspricht. Es kann davon ausgegangen werden, dass ein Nutzfahrzeug an der Hinterachse durch seitliche Krafteinwirkung um einen solchen Winkel, beispielsweise auf die Längsträger des Rahmens, versetzt werden kann, ohne dass Beschädigungen oder übermäßiger Abrieb an den Reifen auftritt. Eine solche Winkelbemessung ist insbesondere bei Doppelachsanhängern von großer Bedeutung. Zweckmäßigerweise wird der Winkel, in dem eine oder beide vertikale Führungsflächen zur Längsachse angeordnet sind, nach dem größten minimalen Wendekreis aller marktüblichen Nutzfahrzeuge bemessen.

Zwei erste Führungselemente können in Form zweier schwenkbar an einem Basisteil angelenkter Führungsschienen vorgesehen sein.

Solche Führungsschienen können zusammen mit Steigrollen oder Steigkufen rechts und links am Fahrzeugheck oder zwischen den Hinterrädern verwendet werden.

In Weiterbildung der Erfindung sind Mittel zum Entlasten einer Hinterradfederung des Nutzfahrzeugs vorgesehen.

Dadurch liegt das Nutzfahrzeug ausschließlich über seine Führungselemente auf, so dass beim Be- und Entladen kein Einfedern oder Schwimmen des Nutzfahrzeugs zu befürchten ist, wie dies bei nicht entlasteter Hinterradfederung der Fall ist. Eine Entlastung der Hinterradfederung kann beispielsweise durch einen Anschlag bewirkt werden, der mit einem Hebel am Nutzfahrzeug zusammenwirkt, bei dessen Betätigung Druckluft aus einer Luftfederung der Hinterachse abgelassen wird. Ebenfalls möglich ist das Absenken der Hinterräder zur Federentlastung.

Die gattungsgemäße Positioniereinrichtung kann mit einer ansteuerbaren Höheneinstellvorrichtung zum Verstellen des wenigstens einen ersten Führungselements in Fahrzeughochrichtung versehen sein, so dass eine Höhenanpassung einer Ladefläche eines Nutzfahrzeugs an eine Laderampe erfolgen kann. Eine Wegfahrsperre kann beispielsweise durch Blockierung der Steigrollen am Nutzfahrzeug oder Keile vor dessen Rädern erfolgen.

Das der Erfindung zugrunde liegende Problem wird auch durch einen Führungselementsatz mit wenigstens zwei Steigrollen oder Steigkufen zur Verwendung mit einer Positioniereinrichtung nach einem der vorstehenden Ansprüche gelöst, wobei die Steigrollen oder Steigkufen Mittel zum Befestigen der Steigrollen an einem Nutzfahrzeugrahmen aufweisen und wobei die Steigrollen oder Steigkufen mit Führungselementen und Anschlagmitteln an der Positioniereinrichtung zusammenwirken können, um eine Positionierung des Nutzfahrzeugs in Fahrzeuglängs-, Fahrzeugquer- und Fahrzeughochrichtung zu erreichen.

Mittels eines solchen Führungselementsatzes können Nutzfahrzeuge in einfacher Weise nachgerüstet werden. Neben einer Positionierung des Nutzfahrzeugs kann mittels der Steigrollen oder Steigkufen auch eine Fixierung in Fahrzeuglängsrichtung, entsprechend der Wirkung einer Wegfahrsperre, erreicht werden.

Die Steigrollen oder Steigkufen sind für eine Anordnung im Heckbereich eines Nutzfahrzeugs und mit einem Abstand in Fahrzeugquerrichtung voneinander im Bereich der Spurweite des Nutzfahrzeugs oder für eine Anordnung zwischen Hinterrädern eines Nutzfahrzeugs ausgelegt. Die Steigrollen können kegel- oder kegelstumpfförmig ausgebildet sein. Mittels solcher Steigrollen kann das Nutzfahrzeug beim Auffahren auf Führungsschienen, die vorteilhafterweise geneigt und ballig ausgebildet sind, selbsttätig in Fahrzeugquerrichtung positioniert werden. Die verjüngten Enden der Steigrollen sind vorteilhafterweise zu den Außenseiten des Nutzfahrzeugs hin ausgerichtet.

Wenigstens eine Steigrolle kann in einer ihrer Stirnflächen eine konzentrische, ringförmige Ausnehmung mit wenigstens einer senkrecht zur Stirnfläche gesehen mehreckigen Berandung aufweisen, die für den Eingriff eines ansteuerbaren Sperrriegels vorgesehen ist. Auf diese Weise kann die Steigrolle blockiert werden, wobei durch die vorteilhafterweise achteckige Berandung mehrere Blockierstellungen möglich sind. Der Sperrriegel kann am Nutzfahrzeug oder an der Positioniereinrichtung angeordnet sein.

Es kann vorgesehen sein, dass wenigstens eine Steigrolle mehrere konzentrisch angeordnete Bohrungen für den Eingriff eines ansteuerbaren Sperrriegels aufweist. Auch durch diese Maßnahmen kann die Steigrolle durch einen am Nutzfahrzeug oder Positioniereinrichtung angeordneten Sperrriegel in mehreren Stellungen blockiert werden.

Vorteilhafterweise sind Steigkufen für eine Anordnung im Heckbereich eines Nutzfahrzeugs an voneinander abgewandten Außenseiten von Längsträgern eines Nutzfahrzeugrahmens vorgesehen.

Durch Anordnung an den Außenseiten von Längsträgern lässt sich eine geeignete Kraftverteilung bei einem Angriff der Steigkufen an den Führungsflächen der Positioniereinrichtung erreichen. Bei Längsträgern mit I-förmigen oder U-förmigen Querschnitt ist eine einfache Montage mittels eines die rinnenartige Vertiefung der Längsträger ausfüllenden Füllstücks möglich.

In Weiterbildung der Erfindung sind eine rechte und eine linke Steigkufe als Schenkel eines U-artigen Führungsbügels ausgebildet.

Dadurch ergibt sich zum einen eine äußerst stabile Konstruktion, die insbesondere Führungskräfte in Fahrzeugquerrichtung aufnehmen und gleichmäßig in den Nutzfahrzeugrahmen einleiten kann. Eine die Schenkel verbindende Basis kann beispielsweise als Unterfahrschutz im Heckbereich eines Nutzfahrzeugs dienen.

In Weiterbildung der Erfindung ist eine die rechte und die linke Steigkufe verbindende Basis des Führungsbügels für einen Angriff an einem Endanschlag und/oder einem beweglichen Sicherungsanschlag vorgesehen.

Auf diese Weise lässt sich eine Pufferung des Nutzfahrzeugs über einen Anstoß der Basis des Führungsbügels an einen Puffer sowie eine Wegfahrsperre des Nutzfahrzeugs erreichen, indem beispielsweise ein beweglicher Sicherungshaken die Basis des Führungsbügels in der Endstellung festhält. Dadurch können mehrere Funktionen mit einem einzigen, gegebenenfalls nachzurüstenden Bauteil realisiert werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Schnittansicht einer ersten Ausführungsform der erfindungsgemäßen Positioniereinrichtung,
- Fig. 2: eine Draufsicht auf die Positioniereinrichtung der Fig. 1,
- Fig. 3: eine schematische Schnittansicht einer zweiten Ausführungsform der erfindungsgemäßen Positioniereinrichtung,
- Fig. 4: eine schematische Vorderansicht einer dritten Ausführungsform der erfindungsgemäßen Positioniereinrichtung mit einem erfindungsgemäßen Steigrollensatz,
- Fig. 5: eine Seitenansicht einer erfindungsgemäßen Steigrolle,
- Fig. 6: eine Seitenansicht einer weiteren erfindungsgemäßen Steigrolle,
- Fig. 7: die ersten Führungselemente einer vierten Ausführungsform der Erfindung,
- Fig. 8: die ersten Führungselemente einer fünften Ausführungsform der Erfindung,
- Fig. 9: die ersten Führungselemente einer sechsten Ausführungsform der Erfindung,
- Fig. 10: eine seitliche, abschnittsweise Schnittansicht eines der Führungselemente der Fig. 9,
- Fig. 11: eine abschnittsweise Schnittansicht in der Draufsicht eines der Führungselemente der Fig. 9,
- Fig. 12: zwei Steigkufen für eine erfindungsgemäße Positioniereinrichtung,
- Fig. 13: zwei weitere Steigkufen für eine erfindungsgemäße Positioniereinrichtung,
- Fig. 14: die ersten Führungselemente einer siebten Ausführungsform der Erfindung und
- Fig. 15: Steigkufen zur Verwendung mit den Führungselementen der Fig. 14.

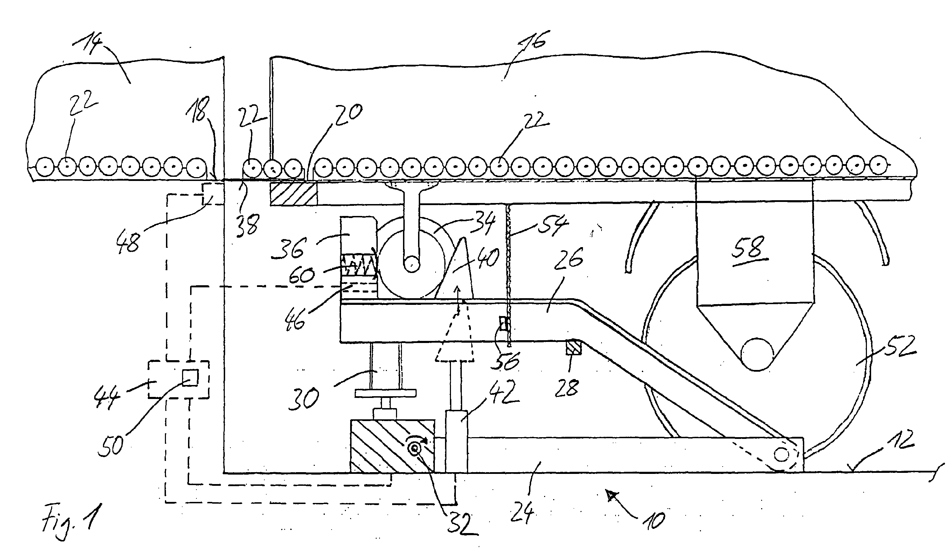

Die in der Fig. 1 dargestellte Positioniereinrichtung 10 ist auf einer Fahrbahn 12 angeordnet, an die sich ein Gebäude 14 anschließt. Auf die Positioniereinrichtung 10 ist ein Nutzfahrzeug 16 aufgefahren, von dem lediglich ein Abschnitt des Heckbereichs dargestellt ist.

Eine Laderampe 18 in dem Gebäude 14 und eine Ladefläche 20 in dem Nutzfahrzeug 16 sind in der Darstellung der Fig. 1 mit Verladerollen 22 versehen, die ein automatisches Be- und Entladen des Nutzfahrzeugs 16 erleichtern.

Die Positioniereinrichtung 10 weist ein Basisteil 24 auf, an dem schwenkbar zwei Führungsschienen 26 angelenkt sind, von denen in der Fig. 1 lediglich eine zu erkennen ist. Die zwei Führungsschienen 26 sind mittels eines Querstegs 28 miteinander verbunden. Um eine Winkellage der Führungsschienen 26 zum Basisteil 24 zu verändern, ist eine Höheneinstellvorrichtung 30 vorgesehen, mit der jeweils ein Ende einer Führungsschiene 26, das dem am Basisteil 24 angelenkten Ende der jeweiligen Führungsschiene 26 abgewandt ist, gegen das Basisteil 24 abgestützt wird. Die Höheneinstellvorrichtung 30 weist eine Spindel auf, die mittels eines in der Fig. 1 lediglich schematisch angedeuteten Elektromotors 32 verstellt wird. Auf den Führungsschienen 26 liegen Steigrollen 34 auf, die mit einem Rahmen des Nutzfahrzeugs 16 verbunden sind. Durch Anheben oder Absenken der Steigrollen 34 kann somit die Ladefläche 20 des Nutzfahrzeugs 16 in ihrer Höhe über der Fahrbahn 12 eingestellt werden.

An einem jeweiligen, der Laderampe 18 zugewandten Ende der Führungsschienen 26 ist jeweils ein Endanschlag 36 vorgesehen. Der Endanschlag 36 definiert eine Endposition der Steigrollen 34 und damit des Nutzfahrzeugs 16. In der Fig. 1 ist die Endposition der Steigrollen 34 dargestellt, in der das Nutzfahrzeug 16 geeignet angeordnet ist, um beoder entladen zu werden. Ein in der Fig. 1 dargestellter Spalt zwischen der Ladefläche 20 des Nutzfahrzeugs 16 und der Laderampe 18 des Gebäudes 14 wird mittels eines klappbaren Zwischenelements 38 überbrückt, das ebenfalls mit Verladerollen 22 versehen ist. Auf der, dem Endanschlag 36 gegenüberliegenden Seite der Steigrollen 34 greift jeweils ein Sicherungsanschlag 40 an. Dadurch wird die Steigrolle 34 zwischen dem Endanschlag 36 und dem Sicherungsanschlag 40 aufgenommen, wodurch diese in Längsrichtung des Nutzfahrzeugs 16 auf der Führungsschiene 26 blockiert ist. Dadurch wird die Wirkung einer Wegfahrsperre erreicht, da das gesamte Nutzfahrzeug 16 mittels des Endanschlags 36 und des Sicherungsanschlags 40 gegen eine Bewegung in Fahrzeuglängsrichtung gehalten wird.

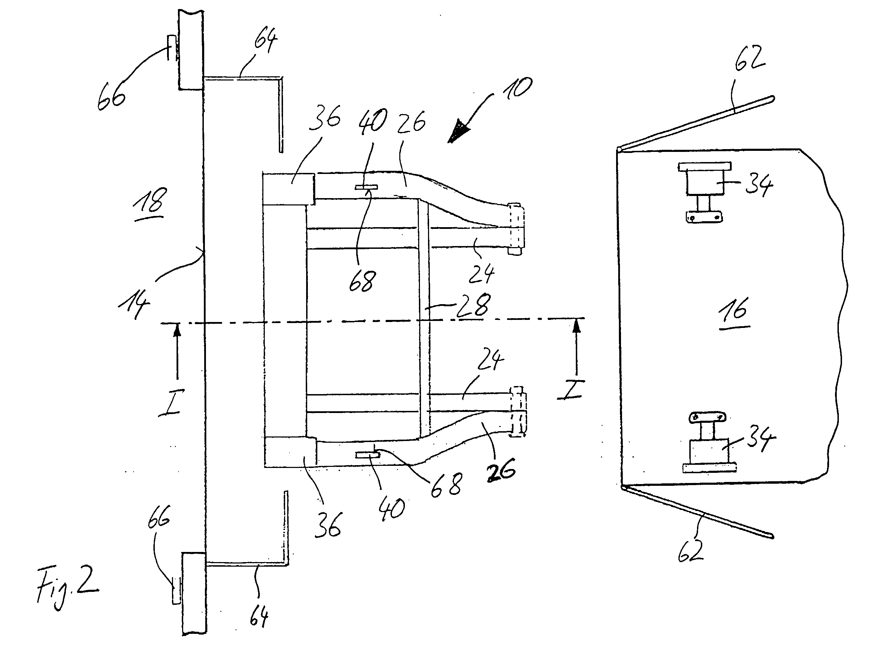

Eine Sicherungsposition des Sicherungsanschlags 40, in der dieser die Steigrolle 34 sichert, ist in der Darstellung der Fig. 1 durchgezogen dargestellt. Eine Freigabeposition des Sicherungsanschlags 40 ist dahingegen gestrichelt dargestellt. Von der gestrichelt dargestellten Freigabeposition wird der Sicherungsanschlag 40 in die durchgezogen dargestellte Sicherungsposition mittels eines elektrischen Hubelements 42 linear verschoben. Wie im Zusammenhang mit der Fig. 2 noch erläutert wird, ist der Sicherungsanschlag 40 plattenförmig ausgebildet und wird durch eine schlitzförmige Ausnehmung in der Führungsschiene 26 geschoben. Die schlitzartige Ausnehmung befindet sich dabei in einem Schenkel des rechtwinkligen Profils der Führungsschiene 26.

Eine Ansteuerung der Höheneinstellvorrichtung 30 und des Hubelements 42 erfolgt mittels einer zentralen Steuereinheit 44. Zur Ansteuerung der Höheneinstellvorrichtung 30 und des Hubelements 42 werden der zentralen Steuereinheit 44 Signale eines ersten Sensors 46 in dem Endanschlag 36 und eines zweiten Sensors 48 im Bereich der Laderampe 18 übermittelt. Darüber hinaus ist an der zentralen Steuereinheit 44 ein Druckknopf 50 vorgesehen, mit dem eine Beendigung eines Ladevorgangs signalisiert werden kann. Elektrische Verbindungsleitungen zwischen den Sensoren 46 und 48 bzw. der Höheneinstellvorrichtung 30 und dem Hubelement 42 und der zentralen Steuereinheit 44 sind in der Darstellung der Fig. 1 gestrichelt angedeutet.

Vor einem Entladevorgang fährt das beladene Nutzfahrzeug 16 mit geöffneten Hecktüren - falls kein Rolltor vorgesehen ist - rückwärts an die Positioniervorrichtung 10 heran. Das Nutzfahrzeug 16 wird dabei durch Einfahrhilfen geführt und damit vorzentriert. Sobald die im Heckbereich des Nutzfahrzeugs 16 angeordneten Steigrollen 34 auf die Führungsschienen 26 treffen, werden die Steigrollen 34 und damit das Nutzfahrzeug 16 endgültig zentriert und gleichzeitig werden Hinterräder 52 des Nutzfahrzeugs 16 entlastet, da das Gewicht des Hecks nun durch die Steigrollen 34 auf den Führungsschienen 26 lastet. Befinden sich die Steigrollen 34 in dem in der Fig. 1 horizontal verlaufenden Abschnitt der Führungsschienen 26, schlägt ein am Nutzfahrzeug 16 angeordneter Hebel 54 an einem Anschlag 56 an der Positioniereinrichtung 10 an. Dadurch wird der Hebel 54 verschwenkt, und eine Luftfederung 58 der Hinterräder 52 wird durch Ablassen der Druckluft entlastet. Dadurch lastet das vollständige Gewicht des Fahrzeughecks auf den Steigrollen 34 und somit den Führungsschienen 26.

Durch den Aufprall der Steigrollen 34 auf die Endanschläge 36 wird zum einen das Nutzfahrzeug 16 kontrolliert abgebremst. Zum gedämpften Abbremsen des Nutzfahrzeugs 16 ist der Endanschlag 36 mit einer Feder 60 versehen. Zum anderen wird mittels des Sensors 46 ein Signal an die zentrale Steuereinheit 44 gegeben, dass die Steigrollen 34 und somit das Nutzfahrzeug 16 die Endposition erreicht haben. Aufgrund dieses Signals gibt die zentrale Steuereinheit 44 daraufhin ein Signal an das Hubelement 42 bzw. dessen Ansteuerelektronik aus, woraufhin das Hubelement 42 den Sicherungsanschlag 40 aus der in der Fig. 1 gestrichelt dargestellten Freigabeposition in die durchgezogen dargestellte Sicherungsposition verfährt. Damit ist das Nutzfahrzeug 16 im Sinne einer Wegfahrsperre gesichert.

Neben dem Auslösen der Wegfahrsperre kann die zentrale Steuereinheit 44 auch das Öffnen eines vor der Verladerampe 18 angeordneten Tores und/oder das Ausfahren bzw. Aufblasen eines Verladewetterschutzes veranlassen sowie eine Ampelfunktion auslösen.

Darüber hinaus löst die zentrale Steuereinheit 44 auch eine automatische Höhenanpassung der Ladefläche 20 des Nutzfahrzeugs 16 an die Laderampe 18 im Gebäude 14 aus. Hierzu wird der Elektromotor 32 der Höheneinstellvorrichtung 30 von der zentralen Steuereinheit 44 angesteuert und so lange verstellt, bis die zentrale Steuereinheit 44 vom zweiten Sensor 48 ein Signal erhält, dass die Ladefläche 20 mit der Laderampe 18 fluchtet, wobei dieser Zustand in der Fig. 1 dargestellt ist.

Beim Auffahren des Nutzfahrzeugs 16 auf die Positioniereinrichtung 10 befindet sich diese in einer Stellung, in der die Führungsschienen 26 eine maximal mögliche Höhe über der Fahrbahn 12 aufweisen. Nach Auffahren des Nutzfahrzeugs 16 und Verfahren des Sicherungsanschlags 40 in die Sicherungsposition befindet sich die Ladefläche 20 somit in aller Regel auf einem Höhenniveau, das über dem Höhenniveau der Laderampe 18 bzw. auf deren Höhenniveau liegt. Zur Höhenanpassung der Ladefläche 20 und der Laderampe 18 steuert die zentrale Steuereinheit 44 den Elektromotor 32 so an, dass die Führungsschienen 26 langsam abgesenkt werden, bis der zweite Sensor 48 signalisiert, dass die Ladefläche 20 und die Laderampe 18 fluchten. Dies hat den Vorteil, dass das Heck des Nutzfahrzeugs 16 mittels des Elektromotors 32 nicht angehoben sondern lediglich abgesenkt bzw. gehalten werden muss. Die Halte- und Absenkfunktion kann mittels einer Bremse unterstützt werden, so dass der Elektromotor 32 vergleichsweise schwach ausgelegt werden kann.

Nach erfolgter Höhenanpassung kann die zentrale Steuereinheit 44 ein Signal ausgeben, dass mit dem Ladevorgang begonnen werden kann. Nach Beendigung des Ladevorgangs wird der zentralen Steuereinheit 44 ein entsprechendes Signal zur Verfügung gestellt. Dies geschieht durch Drücken eines Tasters 50 an der zentralen Steuereinheit 44. Ein solches Signal kann beispielsweise auch von einem Laderoboter abgegeben werden. Auf das die Beendigung des Ladevorgangs anzeigende Signal hin senkt die zentrale Steuereinheit 44 mittels des Elektromotors 32 und der Höheneinstelleinrichtung 30 die Führungsschienen 26 zunächst soweit ab, dass ein Großteil des Gewichts des Hecks des Nutzfahrzeugs 16 wieder auf den Hinterrädern 52 lastet.

Nach Absenken der Führungsschienen 26 wird mittels des Hubelements 42 der Sicherungsanschlag 40 in die Freigabeposition verfahren. Daraufhin kann die zentrale Steuereinheit 44 ein Ampelsignal schalten. Das Nutzfahrzeug 16 kann nun wegfahren, so dass es sich in der Darstellung der Fig. 1 nach rechts von der Positioniereinrichtung 10 wegbewegt. Dadurch wird der Hebel 54, der zuvor an dem Anschlag 56 anlag, wieder betätigt. Infolgedessen wird die Luftfederung 58 wieder mit Druckluft gefüllt, so dass - gegebenenfalls nach Schließen von Hecktüren des Nutzfahrzeugs 16 - dieses endgültig abfahrbereit ist.

Alternativ kann ― bei Entfall des Hebels 54 ― die Luft mittels geeigneter Steuervorrichtungen vor dem Absenken der Führungsschienen 26 in die Luftfederung 58 gelassen werden.

Die Darstellung der Fig. 2 zeigt eine Draufsicht auf die in der Fig. 1 dargestellte Positioniereinrichtung 10, wobei die Fig. 1 eine Schnittansicht entlang der Linie I-I der Fig. 2 darstellt. In der Fig. 2 gut zu erkennen ist, dass das Nutzfahrzeug 16 mit geöffneten Hecktüren 62 an die Laderampe 18 des Gebäudes 14 herangefahren wird. Dem Gebäude 14 vorgebaut ist ein Verladewetterschutz 64. Innerhalb des Gebäudes 14 ist ein Verladetor 66 schematisch angedeutet.

In Fahrzeuglängsrichtung gesehen und auf die Laderampe 18 zu vergrößert sich der Abstand der Führungsschienen 26 in Fahrzeugquerrichtung zunächst, um dann im Bereich des Endanschlags 36 und des Sicherungsanschlags 40 konstant zu bleiben. Dadurch kann eine Ausrichtung des Nutzfahrzeugs 16 mittels der Steigrollen 34 und der Führungsschienen 26 erfolgen. Hierzu weisen die Steigrollen 34 einen walzenförmigen Grundkörper mit einem umlaufenden Bund auf. Beim Auffahren des Nutzfahrzeugs 16 auf die Positioniereinrichtung 10 kommen die walzenförmigen Grundkörper der Steigrollen 34 auf den Führungsschienen 26 zu liegen, wohingegen ein jeweiliger Bund der Steigrollen 34 außerhalb der Führungsschienen 26 zu liegen kommt. Da der Abstand der Führungsschienen 26 in Fahrzeugquerrichtung zunimmt, wird das Nutzfahrzeug 16 damit, wenn ein jeweiliger Bund der Steigrollen 34 außen an einer jeweiligen Führungsschiene 26 angreift, beim Auffahren auf die Positioniereinrichtung 10 in Fahrzeugquerrichtung ausgerichtet.

In der Draufsicht der Fig. 2 ist zu erkennen, dass die Sicherungsanschläge 40 jeweils in einer schlitzförmigen Ausnehmung 68 in den Führungsschienen 26 geführt sind.

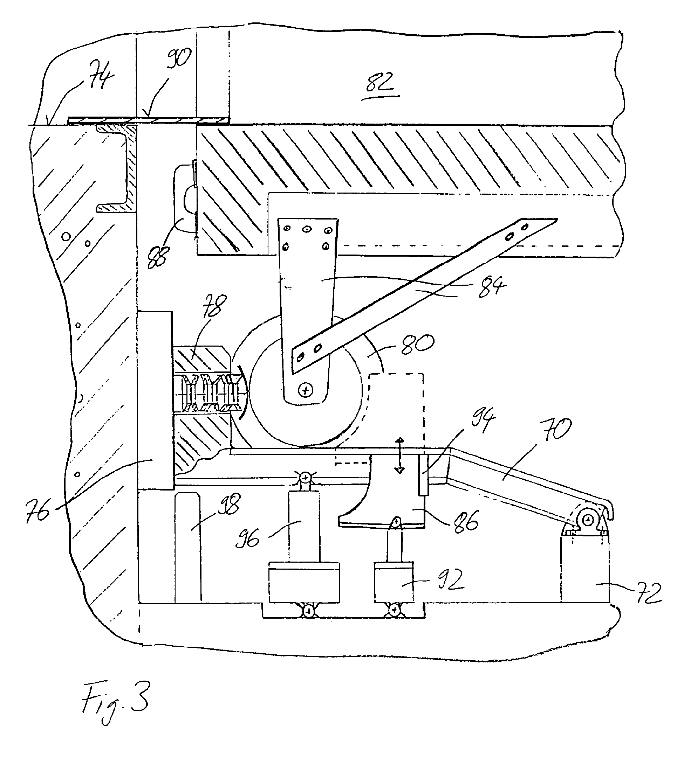

Die schematische Schnittansicht der Fig. 3 zeigt eine zweite Ausführungsform der Erfindung. Gegenüber der Ausführungsform der Fig. 1 sind die Führungsschienen 70 auf einem gegenüber einer Fahrbahnoberfläche erhöhten Fundament 72 angeordnet. Ebenfalls im Unterschied zur Ausführungsform der Fig. 1 und 2 erstrecken sich die Führungsschienen 70 bis zur senkrechten Gebäudewand, oberhalb derer die Laderampe 74 angeordnet ist. An dieser senkrechten Gebäudewand sind die Führungsschienen 70 mittels jeweils eines U-Profils 76 in vertikaler Richtung geführt. Mit den Führungsschienen 70 in dem U-Profil 76 geführt ist ein mit den Führungsschienen 70 verbundener Endanschlag 78, der geschnitten dargestellt ist. Der Endanschlag 78 weist mehrere, hintereinander angeordnete Tellerfedern auf, die den Anprall von Steigrollen 80 abpuffern. Die Steigrollen 80 sind unmittelbar angrenzend an das Heck eines Nutzfahrzeugs 82 unterhalb dessen Ladefläche angeordnet. Um die beim Anprall an den Anschlag 78 auftretenden Kräfte aufnehmen und in den Rahmen des Nutzfahrzeugs 82 einleiten zu können, sind die Steigrollen 80 mittels Verstrebungen 84 an dem Rahmen des Nutzfahrzeugs 82 befestigt. Neben den Kräften beim Anprall an den Anschlag 78 müssen die Verstrebungen 84 auch die Kräfte aufnehmen, die auftreten, wenn die Steigrollen 80 durch einen vertikal verschiebbaren Anschlag 86 blockiert sind. Wenn der Anschlag 86 in seine Sperrstellung, die in der Fig. 3 gestrichelt dargestellt ist, verfahren ist, erfüllt dieser die Funktion einer Wegfahrsperre, so dass die Verstrebungen 84 erhebliche Kräfte in den Rahmen des Nutzfahrzeugs 82 einleiten müssen. Am äußersten Ende des Nutzfahrzeugs 82 ist zur zusätzlichen Absicherung ein elastischer Puffer 88 angeordnet. Zur Überbrückung eines verbleibenden Spalts zwischen der Laderampe 74 und der Ladefläche des Nutzfahrzeugs 82 dient eine schematisch angedeutete Verladebrücke 90.

Um den Anschlag 86 aus der zurückgezogenen, unteren Stellung in die gestrichelt dargestellte ausgefahrene Stellung zu verfahren, ist ein hydraulischer Hubzylinder 92 vorgesehen. Der Anschlag 86 wird durch einen Schlitz in einer jeweiligen Führungsschiene 70 geschoben und ist zusätzlich durch eine Führung 94 an der Schiene 70 geführt. Der Hydraulikzylinder 92 ist sowohl auf der Fahrbahnoberfläche als auch am Anschlag 86 gelenkig gelagert. Die zweite, in der Fig. 3 nicht sichtbare Führungsschiene 70 ist ebenfalls mit einem Anschlag 86 sowie einem Hydraulikzylinder 92 versehen.

Eine Höhenverstellung der Führungsschienen 70 wird mittels jeweils eines Hydraulikzylinders 96 bewirkt, die sowohl an jeweils einer Führungsschiene 70 als auch auf einem Fundament gelenkig gelagert sind. Zur Vereinfachung der Darstellung sind eine Steuereinheit sowie Sensoren zur Steuerung der Hydraulikzylinder 96 und 92 in der Darstellung der Fig. 3 weggelassen.

Eine untere Endstellung der Führungsschienen 70 wird durch einen Anschlag 98 definiert.

Da die Führungsschienen 70 sich bis zur Gebäudewand erstrecken und die Steigrollen 80 unmittelbar am Heck des Nutzfahrzeugs 82 angeordnet sind, ist die in der Fig. 3 dargestellte Positioniereinrichtung auch für Nutzfahrzeuge mit Unterfahrschutz geeignet. Dies deshalb, da die Steigrollen 80 unmittelbar hinter einem Unterfahrschutz angeordnet sind und dann, wenn ein Unterfahrschutz in den Bereich der Führungsschienen 70 gelangt, das Fahrzeugheck über die Steigrollen 80 im wesentlichen gleichzeitig angehoben wird.

Die schematische Ansicht der Fig. 4 zeigt eine schematische Vorderansicht einer dritten Ausführungsform der Erfindung. Ein Nutzfahrzeug 100 ist hier mit zwei kegelstumpfförmigen Steigrollen 102 versehen, die so angeordnet sind, dass ihre größeren Grundflächen einander zugewandt sind und sie sich in Längsrichtung des Fahrzeugs gesehen, zu jeweils einer Seite hin verjüngen. Die Steigrollen 102 laufen auf Führungsschienen 104, deren, den Steigrollen 102 zugewandte Führungsfläche geneigt ist. Die Führungsflächen der beiden Führungsschienen 104 sind so geneigt, dass sie einander zugewandt sind. Darüber hinaus sind diese Führungsfläche 106 ballig ausgebildet, so dass die Steigrollen 102 nicht auf der gesamten Breite der Führungsflächen 106 aufliegen. Mittels der kegelstumpfförmigen Führungsrollen 102 und der geneigten Führungsflächen 106 kann das Nutzfahrzeug 100 in Fahrzeugquerrichtung selbsttätig positioniert werden, wenn die Steigrollen 102 auf den Führungsschienen 104 ablaufen. Denn durch die gewählte Form der Steigrollen 102 und der Führungsschienen 104 wird das Nutzfahrzeug 100 zu den Führungsschienen 104 zentriert.

In der Darstellung der Fig. 5 ist eine Steigrolle 108 in Seitenansicht dargestellt. Zu erkennen ist eine Stirnseite der Steigrolle 108. Um die Steigrolle 108 blockieren zu können, weist diese eine ringförmige Ausnehmung 110 auf, deren außen, nämlich zum Umfang der Steigrolle 108 hin, liegende Berandung der Außenhaut eines im Querschnitt achteckigen Zylinders entspricht. Dadurch sind insgesamt acht Anlageflächen für einen Sperrriegel 112 geschaffen, der in die ringförmige Ausnehmung 110 eingeschoben werden kann, um die Steigrolle 108 zu blockieren. Der Sperrriegel 112 kann dabei am Nutzfahrzeug oder an der Positioniereinrichtung angeordnet sein.

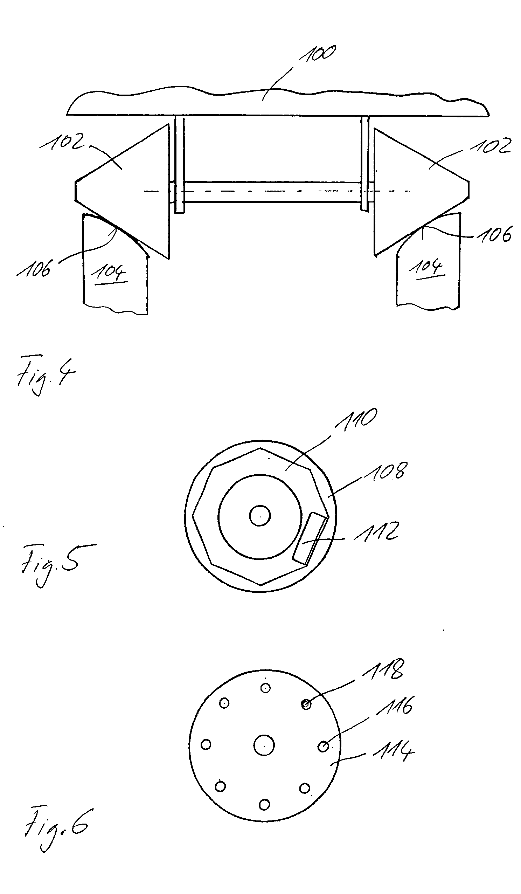

Eine weitere Steigrolle 114 ist in der Seitenansicht der Fig. 6 dargestellt, wobei, analog zur Darstellung der Fig. 5, eine Stirnseite der Steigrolle 114 zu erkennen ist. Die Steigrolle 114 weist in ihrer Stirnseite insgesamt acht konzentrisch angeordnete Bohrungen 116 auf, die für den Eingriff eines Sperrriegels 118 vorgesehen sind. Der Sperrriegel kann am Nutzfahrzeug oder an der Positioniereinrichtung selbst angeordnet sein und dient dazu, die Steigrolle 114 zu blockieren.

Durch Blockierung der Steigrollen kann die Funktion einer Wegfahrsperre realisiert bzw. unterstützt werden.

Die Darstellung der Fig. 7 zeigt eine rechte Führungsschiene 120 und eine linke Führungsschiene 122. Die Führungsschienen 120, 122 können beispielsweise mit Steigkufen am Heck eines Nutzfahrzeugs zusammenwirken, um dessen Ladefläche in Fahrzeughochrichtung und Fahrzeugquerrichtung zu positionieren und darüber hinaus die Steigkufen in einer Endstellung zu fixieren, um eine Wegfahrsperre zu realisieren. Die Führungsschienen 120, 122 weisen jeweils eine rampenartige Führungsfläche 124, 126 auf, die als Gitterrost ausgestaltet ist und in einem Winkel zur Fahrbahnoberfläche angeordnet ist. Wenn die Steigkufen des Nutzfahrzeugs auf die Gitterroste 124, 126 auffahren und auf diesen entlanggleiten, wird das Heck des Nutzfahrzeugs angehoben. Die Gitterroste 124, 126 gehen in horizontal angeordnete Führungsflächen 128, 130 über. Wenn die Steigkufen des Nutzfahrzeugs auf den horizontalen Führungsflächen 128, 130 angelangt sind, befindet sich die Ladefläche des Nutzfahrzeugs bereits auf gleicher Höhe mit der Laderampe. An dem, den Gitterrosten 124, 126 gegenüberliegenden Enden der horizontalen Führungsflächen 128, 130 ist jeweils ein Puffer 132, 134 angeordnet, der als Endanschlag für die Steigkufen des Nutzfahrzeugs vorgesehen ist. Durch die Puffer 132, 134 wird das Nutzfahrzeug kurz vor Erreichen der Laderampe elastisch abgefangen. Die Pufferung erfolgt dabei über die Steigkufen, die an den Längsträgern des Nutzfahrzeugrahmens angeordnet sind. Die bei der Pufferung auftretende Kraft wird somit unmittelbar in den Rahmen des Nutzfahrzeugs eingeleitet. An der Laderampe bzw. dem zugehörigen Gebäude und dem Aufbau des Nutzfahrzeugs selbst ist dadurch keine Pufferung mehr erforderlich, und es kann sichergestellt werden, dass der Aufbau des Nutzfahrzeugs das Gebäude bzw. die Laderampe nicht berührt. Dadurch werden Beschädigungen des Aufbaus und des Gebäudes vermieden.

Im Bereich der horizontalen Führungsflächen 128, 130 ist jeweils ein beweglicher Sicherungsanschlag 136, 138 angeordnet, der aus einem Gehäuse in den Bereich der horizontalen Führungsflächen 128, 130 verschoben werden kann. Wenn die Steigkufen des Nutzfahrzeugs an den Puffern 132, 134 angeschlagen sind, kann beispielsweise ein Signal ausgelöst werden, das ein Ausfahren der Sicherungsanschläge 136, 138 bewirkt. Mittels der Sicherungsanschläge 136, 138 wird die Funktion einer Wegfahrsperre realisiert. Über die Steigkufen wird das Nutzfahrzeug dann unmittelbar am Rahmen festgehalten. Dadurch kann bei einem versehentlichen Losfahrversuch eine zuverlässigere Sicherung als durch Unterlegkeile erreicht werden. Erst nach Beendigung des Ladevorgangs bewirkt ein Freigabesignal, dass die Sicherungsanschläge 136, 138 wieder in das zugehörige Gehäuse verfahren werden und dadurch die Steigkufen freigeben.

Das Vorsehen der Gitterroste 124, 126 sorgt für eine wenig verschmutzungsanfällige Positioniereinrichtung. So werden eventuell auf dem Gitterrost 124, 126 liegende Verunreinigungen, beispielsweise Schmutz, Schnee oder Eis, beim Auffahren der Steigkufen durch die Gitterroste 124, 126 hindurchgedrückt.

Die rechte Führungsschiene 120 und die linke Führungsschiene 122 sind jeweils L-artig ausgebildet, wobei sich an die Gitterroste 124, 126 bzw. an die horizontalen Führungsflächen 128, 130 in einem Winkel von etwas mehr als 90° anschließenden Führungsfläche 140, 142 eine Führung der Steigkufen in Fahrzeugquerrichtung bewirken. Die Führungsflächen 140, 142 sind mit einer Hauptkomponente vertikal angeordnet, laufen aber leicht schräg auf die Gitterroste 124, 126 bzw. die horizontalen Führungsflächen 128, 130 zu. Neben der vertikalen Hauptkomponente weisen die Führungsflächen 140, 142 somit eine horizontale Komponente auf, die für einen Versatz einer auf die Führungsfläche 140 bzw. 142 auflaufenden Steigkufe in Fahrzeugquerrichtung sorgt.

Wie der Fig. 7 zu entnehmen ist, ist die Führungsfläche 142 parallel zu einer Längsrichtung 144 angeordnet, die mittels einer strichpunktierten Linie angedeutet ist und die senkrecht zu einer Laderampe verläuft. Bei optimaler Positionierung eines Nutzfahrzeugs fällt dessen Längsachse mit der Längsachse 144 zusammen. Lediglich die rechte Führungsschiene 120 ist in ihrem vorderen, der Laderampe abgewandten Bereich von der Längsachse 144 weggekrümmt. Dadurch wird ein Nutzfahrzeug über seine Steigkufe dann, wenn die Steigkufe auf die Führungsfläche 140 aufläuft, in Fahrzeugquerrichtung, in der Darstellung der Fig. 7 nach links, versetzt. Der Krümmungsradius der Führungsfläche 140 ist dabei so bemessen, dass er dem minimalen Wendekreis eines Nutzfahrzeugs entspricht. Dadurch können die Hinterräder eines Nutzfahrzeugs durch die Führungsfläche 140 seitlich versetzt werden, ohne dass Beschädigungen am Rahmen oder übermäßiger Abrieb an den Reifen zu befürchten wäre.

Die Anfahrt an eine Laderampe wird von Fahrern von Nutzfahrzeugen üblicherweise so vorgenommen, dass sie sich in Rückwärtskurvenfahrt in die Laderampe annähern, wobei sie in der Regel darauf achten, auf der Seite des Kurvenmittelpunktes zu sitzen, um die innenliegende Seitenkante des Fahrzeughecks stets im Blick zu haben. Aus diesem Grund ist lediglich die in der Darstellung der Fig. 7 rechte Führungsschiene 120 gekrümmt ausgeführt, so dass der Fahrer eines links gesteuerten Nutzfahrzeugs die gekrümmte Führungsschiene 120 bei Rückwärtsfahrt im Blick hat und sein Fahrzeug bzw. dessen Steigkufen in die Führungsschienen 120, 122 einfädeln kann. Hat der Fahrer sein Fahrzeug so platziert, dass die in Fahrtrichtung gesehen linke Steigkufe am vorderen, der Laderampe abgewandten Ende der Führungsschiene 120 anliegt, kann er durch Einschlagen der Lenkung dem Krümmungsradius der Führungsfläche 140 folgen und sein Fahrzeug endgültig an die Laderampe heranfahren.

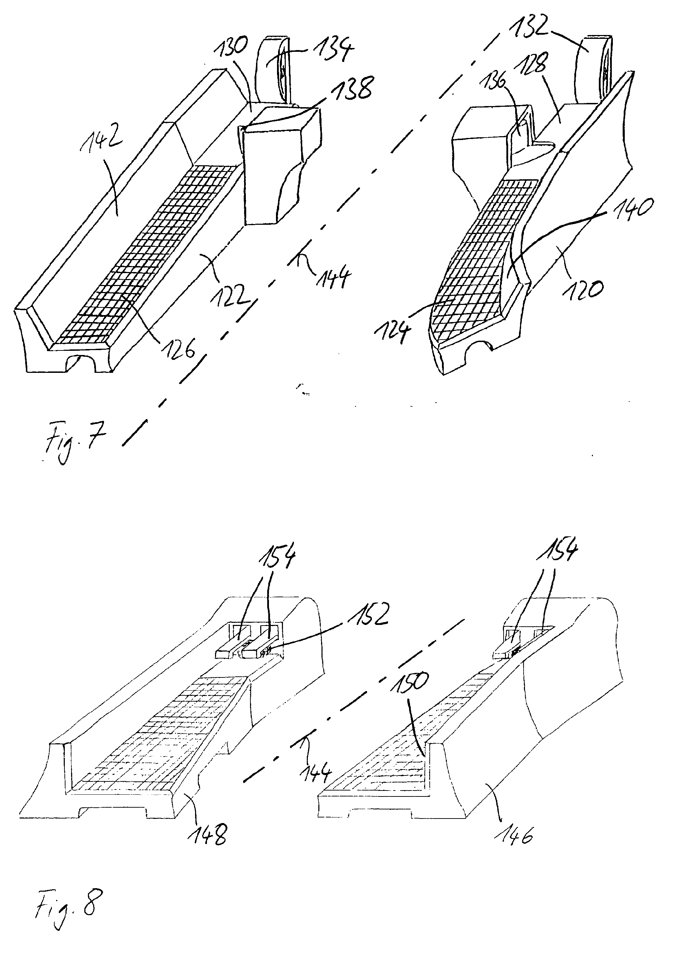

Eine weitere Ausführungsform von Führungsschienen 146, 148 gemäß der Erfindung ist in der Fig. 8 dargestellt. Im Unterschied zur Ausführungsform der Fig. 7 ist ein mit einer Hauptkomponente vertikal angeordnete Führungsfläche 150 der rechten Führungsschiene 146 nicht gekrümmt, sondern eben ausgebildet. Ein Winkel, den die Führungsfläche 150 zur Längsachse 144 einnimmt, ist ebenfalls auf den minimalen Wendekreis eines Nutzfahrzeugs abgestimmt, wobei zweckmäßigerweise der größte minimale Wendekreis aller marktüblichen Nutzfahrzeuge herangezogen wird. Ein solcher Winkel beträgt beispielsweise 5,1° und liegt zweckmäßigerweise in einem Bereich zwischen 3° und 10°. Bei einem Winkel im Bereich von 5,1° kann ein Seitenversatz von 150mm auf eine Länge von 1700mm erreicht werden.

Die Führungsschienen 146, 148 weisen jeweils einen Puffer 152 auf, der einen Endanschlag für Steigkufen eines Nutzfahrzeugs definiert. Als beweglicher Sicherungsanschlag sind an jeder Führungsschiene jeweils zwei Sicherungshaken 154 vorgesehen, die dann, wenn eine Steigkufe eines Nutzfahrzeugs die Endposition erreicht hat und an den Puffer 152 anschlägt, an dieser Steigkufe angreifen und das Nutzfahrzeug dadurch nach Art einer Wegfahrsperre blockieren. Die Sicherungshaken 154 können in der Darstellung der Fig. 8 nach oben bewegt werden, um das Anfahren einer Steigkufe an den Puffer 152 zu ermöglichen und um die Steigkufe nach Beendigung des Ladevorgangs wieder freizugeben.

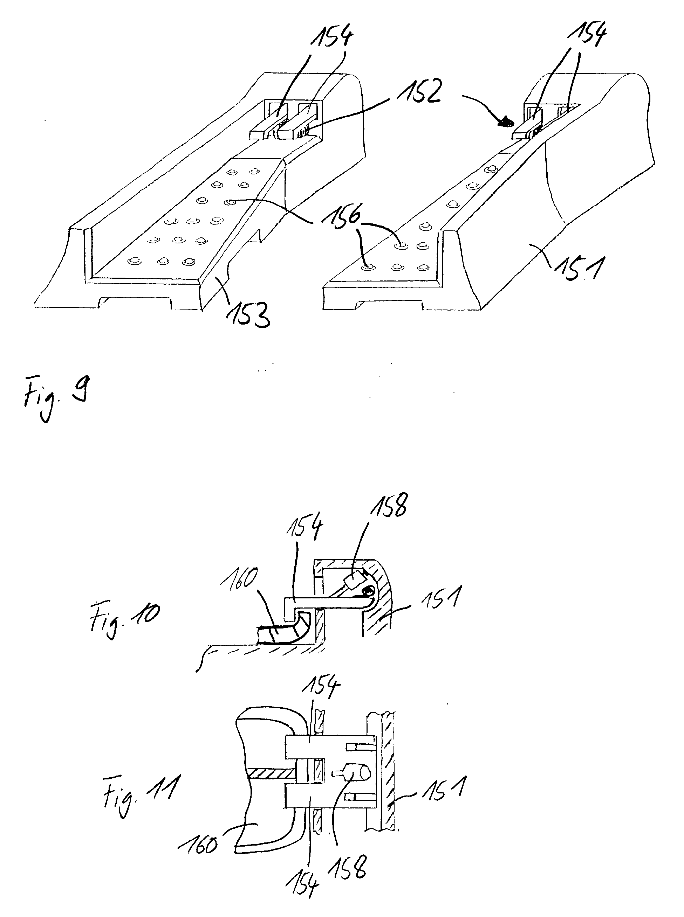

Die Darstellung der Fig. 9 zeigt eine weitere Ausführungsform der Erfindung. Im Unterschied zur Ausführungsform der Fig. 8 sind die Rampen der Führungsschienen mit Kugelrollen 156 versehen. Die einzelnen Kugelrollen 156 sind dabei so weit voneinander beabstandet, dass eine Steigkufe eines Nutzfahrzeugs beim Auffahren auf die Rampen der Führungsschienen auf den Kugeloberflächen der Kugelrollen 156 zu liegen kommt. Dadurch können die Steigkufen reibungsarm geführt werden. Festzuhalten ist noch, dass sowohl die Rampenfläche der in der Darstellung der Fig. 9 rechten Führungsschiene als auch die Rampenfläche der linken Führungsschiene wie die in der Fig. 8 dargestellten Rampenflächen jeweils trapezförmig ausgebildet sind und sich in Richtung auf die Puffer 152 zu verjüngen. Dadurch wird das Einfahren eines Nutzfahrzeugs in die Führungsschienen erleichtert.

Die Darstellung der Fig. 10 zeigt die Sicherungshaken 154 der Führungsschienen 151, 153 bzw. 146 und 148 in einer seitlichen Schnittansicht. Zu erkennen ist, dass die Sicherungshaken 154 gelenkig an einem Gehäuse der Führungsschienen 151, 153 angelenkt sind und mittels eines Hydraulikzylinders 158 in eine Freigabeposition und eine Sperrposition verfahren werden können. Lediglich schematisch ist eine Steigkufe 160 angedeutet, deren Rand der Sicherungshaken 154 in der Sperrposition übergreift und dadurch die Steigkufe in der dargestellten Position sichert.

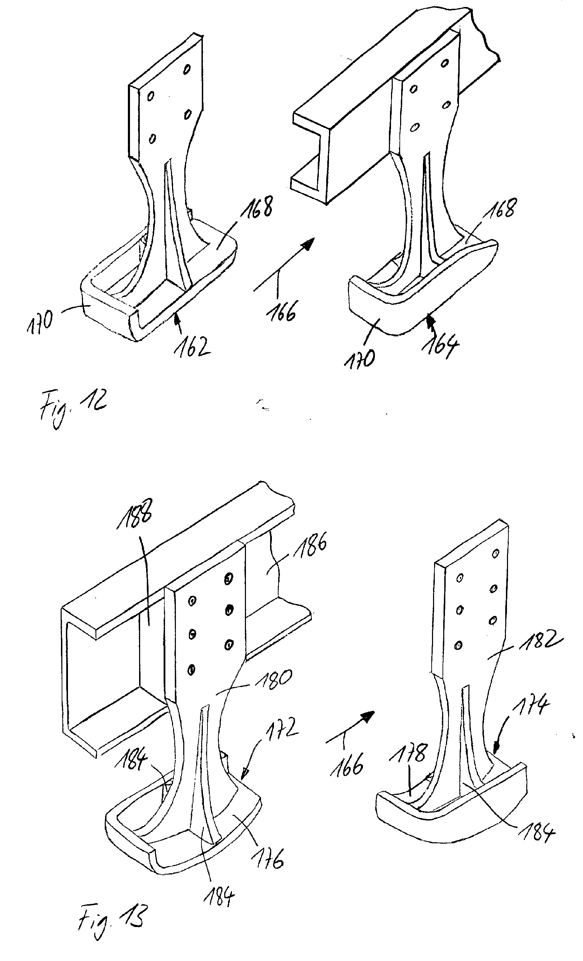

In der Schnittansicht in Draufsicht der Fig. 11 ist zu erkennen, dass beide Sicherungshaken 154 an einer gemeinsamen Basis miteinander verbunden sind und dass diese gemeinsame Basis mittels des Hydraulikzylinders 158 beaufschlagt wird.

Die perspektivische Ansicht der Fig. 12 zeigt zwei Steigkufen 162, 164. Die Steigkufen 162, 164 sind zur Anordnung im Heckbereich eines Kraftfahrzeugs vorgesehen. Die Steigkufen 162, 164 werden unmittelbar an den Längsträgern eines Nutzfahrzeugrahmens befestigt, wobei Befestigungsabschnitte in der Darstellung der Fig. 12 nicht gezeigt sind. In einer Vorwärtsfahrrichtung 166 eines Nutzfahrzeugs wird die Steigkufe 162 links und die Steigkufe 164 rechts angeordnet. Die Steigkufen 162, 164 weisen jeweils eine etwa rechteckige Gleitfläche auf, mit der sie auf die Führungsrampen und die horizontalen Führungsflächen der Führungsschienen auflaufen und in der Endstellung auf diesen aufliegen. Die Gleitflächen sind jeweils auf der Unterseite einer Grundplatte 168 gebildet. An zwei Seitenkanten der jeweiligen Grundplatte 168 schließt sich im rechten Winkel hierzu ein Rand 170 an. Die parallel zur Fahrtrichtung 166 liegenden Abschnitte des jeweiligen Randes 170 sind für den Angriff an im wesentlichen vertikalen Führungsflächen von Führungsschienen vorgesehen und die senkrecht zur Fahrtrichtung 166 angeordneten Abschnitte des jeweiligen Randes 170 sind für den Anschlag an die Puffer bzw. Endanschläge von Führungsschienen vorgesehen. Wie der Darstellung der Fig. 10 und der Fig. 11 zu entnehmen ist, greifen die beweglichen Sicherungshaken 154 über den Rand 170, um die Steigkufen 162, 164 zu fixieren.

Vorzugsweise werden die Steigkufen 162, 164 an den Außenseiten von Längsträgern 186 montiert, wie dies an der in Fahrtrichtung rechten Steigkufe 164 dargestellt ist. Dies ermöglicht eine große Spurweite der Steigkufen 162, 164 und einen günstigen Kraftangriff am Nutzfahrzeugrahmen.

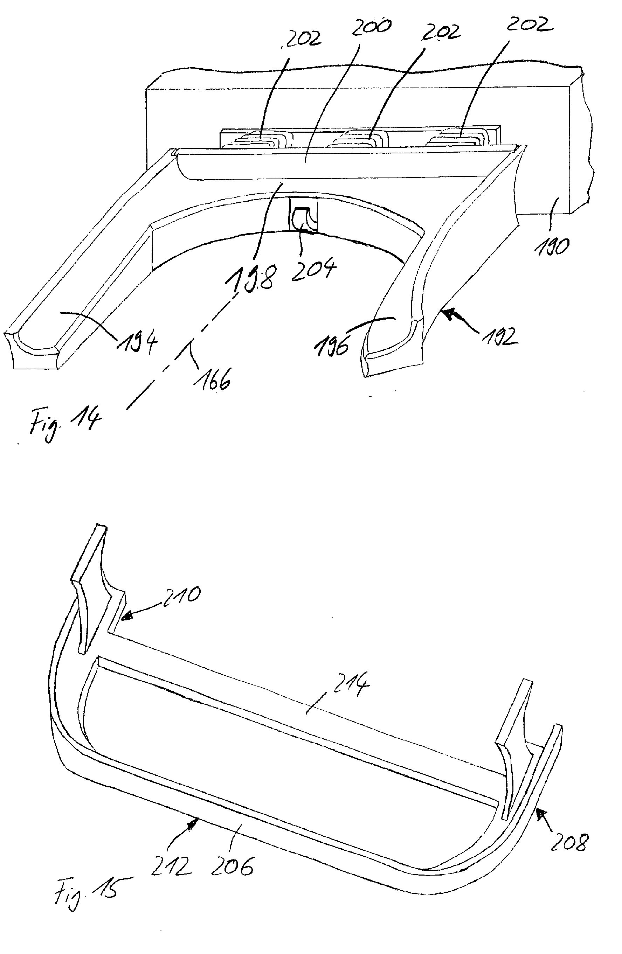

Die Darstellung der Fig. 13 zeigt eine perspektivische Darstellung zweier weiterer erfindungsgemäßer Steigkufen 172, 174, die einen Führungselementsatz gemäß der Erfindung bilden. Im Unterschied zu den Steigkufen der Fig. 12 weisen die Steigkufen 172, 174 jeweils eine ballig gestaltete Gleitfläche an der Unterseite einer jeweiligen Basis auf. Dadurch wird eine Führung des Nutzfahrzeugs, gegebenenfalls im Zusammenspiel mit ebenfalls gekrümmt ausgebildeten Führungsflächen, erleichtert. Die jeweilige Basis 176, 178 der Steigkufen 172, 174 ist mit einem plattenförmigen Befestigungsträger 180 bzw. 182 fest verbunden, der senkrecht auf der jeweiligen Basis 176, 178 steht und mit dieser beispielsweise verschweißt ist. Im montierten Zustand sind die Befestigungsträger 180, 182 parallel zu einer Vorwärtsfahrtrichtung 166 ausgerichtet. Senkrecht zur Fahrtrichtung 166 ist jeder Befestigungsträger 180, 182 mit jeweils zwei plattenartigen Verstrebungen 184 mit der jeweiligen Basis 176, 178 verbunden.

Am Beispiel der in Fahrtrichtung gesehen linken Steigkufe 172 ist deren beispielhafte Befestigung an der Innenseite eines Längsträgers 186 dargestellt. Der Längsträger 186 weist in üblicher Weise einen U-förmigen Querschnitt auf. Mittels eines Füllstücks 188, das den U-förmigen Querschnitt des Längsträger 186 im Bereich des Befestigungsträgers 180 ausfüllt, ist der Befestigungsträger 180 in stabiler Weise an dem Längsträger 186 befestigt. Zur lösbaren Verbindung von Längsträger 186, Füllstück 188 und Befestigungsträger 180 sind insgesamt sechs Schraubverbindungen vorgesehen, wobei in der Darstellung der Fig. 13 lediglich die zugehörigen Durchgangsbohrungen in dem Befestigungsträger 180 dargestellt sind. Mittels des Füllstücks 188 kann auch eine Montage an der Außenseite eines I-förmigen Längsträgers erfolgen.

Die Darstellungen der Fig. 14 und 15 zeigen eine weitere Ausführungsform der erfindungsgemäßen Positioniereinrichtung. Zur Montage auf einer Fahrbahn vor einer Laderampe 190 ist gemäß Fig. 14 ein U-artiges Führungsbauteil 192 vorgesehen, das eine linke Führungsschiene 194, eine rechte Führungsschiene 196 sowie eine die Führungsschienen 194, 196 verbindende Basis 198 aufweist. Die linke Führungsschiene 194 verläuft geradlinig und parallel zu einer Längsachse 166, die senkrecht zur Laderampe 190 verläuft. Die rechte Führungsschiene 196 ist dahingegen in ihrem von der Laderampe 190 abgewandten Bereich von der Längsachse 166 weg nach außen gekrümmt. Im Querschnitt entlang der Längsachse 166 gesehen weisen die beiden Führungsschienen 194 und 196 eine viertelkreisartige Form auf, so dass die vertikalen Führungsflächen und die Rampenflächen bzw. horizontalen Führungsflächen der Führungsschienen 194, 196 mittels eines Krümmungsradius ineinander übergehen. An dem, der Laderampe 190 zugewandten Ende der Basis 198 ist eine senkrecht zur Längsrichtung 166 verlaufende Anschlagleiste 200 vorgesehen, die mittels mehrerer Puffer 202 gegen die Laderampe 190 abgestützt ist. Ebenfalls im Bereich der Basis 198 ist ein ausschwenkbarer Sicherungshaken 204 angeordnet.

Die Darstellung der Fig. 15 zeigt ein für die Befestigung an einem Nutzfahrzeug vorgesehenes zweites Führungselement in Form eines U-Bügels 206. Der U-Bügel 206 wird parallel zu einer Fahrbahnoberfläche unterhalb des Rahmens eines Nutzfahrzeugs angeordnet und integriert eine rechte und linke Steigkufe 208, 210 sowie eine die rechte und die linke Steigkufe verbindende Basis 212. Darüber hinaus sind die rechte Steigkufe 208 und die linke Steigkufe 210 mittels eines Querträgers 214 verbunden. Der U-Bügel 206 bildet dadurch eine äußerst stabile Einheit. Beim Auffahren auf die in der Fig. 14 dargestellten Vorrichtung werden die rechte Steigkufe 208 und die linke Steigkufe 210 durch die Führungsschienen 194 bzw. 196 geführt, bis die Basis 212 des U-Bügels 206 an der Anschlagleiste 200 anschlägt und diese gegebenenfalls gegen die Federkraft der Puffer 202 ein Stück weit in Richtung der Laderampe 190 bewegt. Ist die Basis 212 des U-Bügels 206 und somit das Nutzfahrzeug in einer Endstellung angelangt, was beispielsweise durch Sensoren detektiert werden kann, wird der Sicherungshaken 204 ausgeschwenkt, um die Basis 212 auf der Einrichtung 192 zu fixieren.

## Patentansprüche

1. Positioniereinrichtung für Nutzfahrzeuge mit wenigstens einem mit einer Fahrbahn verbindbaren ersten rampenartigen Führungselement (26; 120, 122; 146, 148; 151, 153; 194, 196), an dem wenigstens ein zweites Führungselement (34; 162, 164; 172, 174) eines Nutzfahrzeugs (16) zur Positionierung einer Ladefläche (20) des Nutzfahrzeugs (16) in Fahrzeughochrichtung angreifen kann, wobei steuerbare Anschlagmittel (36, 40; 136, 138; 132, 134; 152, 154; 200, 204) zur wahlweisen Fixierung des Nutzfahrzeugs (16) in Fahrzeuglängsrichtung vorgesehen sind, **dadurch gekennzeichnet, dass** eine Führung des Nutzfahrzeugs in Fahrzeughoch- und Fahrzeugquerrichtung mittels des an dem ersten rampenartigen Führungselement angreifenden wenigstens einen zweiten Führungselements erfolgt.

2. Positioniereinrichtung nach Anspruch 1, **dadurch gekennzeichnet, dass** als zweites Führungselement wenigstens eine Steigkufe (162, 164; 172, 174) vorgesehen ist.

3. Positioniereinrichtung nach Anspruch 1, **dadurch gekennzeichnet, dass** ein beweglicher Sicherungsanschlag und ein Endanschlag der Anschlagmittel für einen Eingriff, mit dem wenigstens ein zweites Führungselement vorgesehen sind und der Endanschlag mit einem elastischen Puffer (60; 142, 134; 152; 202) versehen ist.

4. Positioniereinrichtung nach einem der vorstehenden Ansprüche, **dadurch gekennzeichnet, dass** eine ansteuerbare Höheneinstellvorrichtung (30, 32) zum Verstellen des wenigstens einen ersten rampenartigen Führungselements (26) in Fahrzeughochrichtung vorgesehen ist.

5. Positioniereinrichtung nach einem der vorstehenden Ansprüche, **dadurch gekennzeichnet, dass** als erste Führungselemente zwei L-artige Führungsschienen (26; 120, 122; 146, 148; 151, 153; 194, 196) vorgesehen sind.

6. Positioniereinrichtung nach einem der vorstehenden Ansprüche, **dadurch gekennzeichnet, dass** das erste Führungselement wenigstens eine gitterrostartig ausgebildete Rampenfläche (124, 126) aufweist.

7. Positioniereinrichtung nach einem der vorstehenden Ansprüche, **dadurch gekennzeichnet, dass** das erste Führungselement wenigstens eine mit mehreren Kugelrollen (156) versehene Rampenfläche aufweist.

8. Positioniereinrichtung nach einem der vorstehenden Ansprüche, **dadurch gekennzeichnet, dass** das erste Führungselement zwei mit einer Hauptkomponente vertikal angeordnete Führungsflächen (140, 142; 150) aufweist, wobei sich ein Abstand der vertikalen Führungsflächen in Richtung auf den Endanschlag zu verringert, eine der Führungsflächen (142) parallel zu einer Längsachse (144) der Positioniereinrichtung angeordnet ist und die andere Führungsfläche (140; 150) in einem Winkel zu dieser Längsachse (144) verläuft.

9. Positioniereinrichtung nach einem der vorstehenden Ansprüche, **dadurch gekennzeichnet, dass** der Winkel, in dem die andere vertikale Führungsfläche (140; 150) zur Längsachse (144) angeordnet ist, zwischen 3° und 10°, insbesondere 5° beträgt.

10. Führungselementsatz mit wenigstens zwei Steigrollen (34) oder Steigkufen (162, 164; 172, 174: 206) zur Verwendung mit einer Positioniereinrichtung (10) nach einem der vorstehenden Ansprüche mit Mitteln zum Befestigen der Steigrollen (34) oder Steigkufen an einem Nutzfahrzeugrahmen, wobei die Steigrollen (34) oder Steigkufen mit Führungselementen (26) und Anschlagmitteln (36, 40) an der Positioniereinrichtung (10) oder dem Nutzfahrzeug zusammenwirken können, um eine Positionierung des Nutzfahrzeugs (16) in Fahrzeuglängs-, Fahrzeugquer- und Fahrzeughochrichtung zu erreichen.

11. Führungselementsatz nach Anspruch 10, **dadurch gekennzeichnet, dass** die Steigkufen für eine Anordnung im Heckbereich eines Nutzfahrzeugs (16) an voneinander abgewandten Außenseiten von Längsträgern eines Nutzfahrzeugrahmens vorgesehen sind.

12. Führungselementsatz nach Anspruch 10 oder Anspruch 11, **dadurch gekennzeichnet, dass** eine rechte und eine linke Steigkufe (208, 210) als Schenkel eines U-artigen Führungsbügels (206) ausgebildet sind.

13. Führungselementsatz nach Anspruch 12, **dadurch gekennzeichnet, dass** eine die rechte und die linke Steigkufe (208, 210) verbindende Basis (212) des Führungsbügels (206) für einen Angriff an einem Endanschlag (200) und/oder einem beweglichen Sicherungsanschlag (204) vorgesehen ist.
